# EUROPEAN PATENT APPLICATION

(11) **EP 3 766 743 A1**
(43) Date of publication of application: **20.01.2021**
(21) Application number: 19767336.1
(22) Date of filing: 13.03.2019
(51) Int. Cl.: B60R 19/50, B60Q 1/00, B60R 19/48, F21S 41/29

(54) **VEHICULAR EXTERIOR ASSEMBLY INCLUDING BUMPER FASCIA**

(30) Priority: 15.03.2018 JP 2018048476
(71) Applicant: KOITO MANUFACTURING CO., LTD., Minato-ku Tokyo 108-8711 (JP)
(72) Inventor: SONODA Hiroyuki, Shizuoka-shi Shizuoka 424-8764 (JP)
(74) Representative: Wachinger, Julian Friedrich
(86) International application number: PCT/JP2019/010305
(87) International publication number: WO 2019/177035

(57) **Abstract**

**Problem:** To integrate portions of lamps and sensors with a bumper fascia, reduce the number of components and the number of man-hours for assembly, and easily assemble a vehicle exterior assembly to an outer surface of a vehicle body.

**Solution:** In an exterior assembly 11 for being installed on a front surface of a vehicle body, head lamps 13 and fog lamps 14 that provide illumination in front of a vehicle and sensors 15 that collect information from in front of the vehicle are arranged in vertical rows on a bumper fascia 12. Lens portions 18 and 21 of the lamps 13 and 14 and antenna portions 24 of the sensors 15 are integrally formed with both right and left ends of the bumper fascia 12. Body portions 19 and 22 of the lamps 13 and 14 and case portions 25 of the sensors 15 are integrally formed in a separate molding step from that for the bumper fascia 12 and assembled to a back surface of the bumper fascia 12 as single components.

## Description

### TECHNICAL FIELD

The present invention relates to a vehicle exterior assembly installed on an outer surface of a vehicle, and more particularly to a vehicle exterior assembly including a bumper fascia provided with lamps and sensors.

### BACKGROUND ART

Conventionally, in order to save weight and diversify vehicle designs, a technology has been known to mold a front bumper fascia or a rear bumper fascia in resin and dispose, on both ends thereof, lamps for providing illumination. For example, Patent Literature 1 describes forming openings for exposing lens portions of lamps on both right and left ends of a bumper fascia that covers a front surface of a vehicle body, and assembling, with bolts, body portions that retain light-source units of the lamps.

In addition, as bumpers are installed in locations suitable for collecting information about pedestrians, other vehicles, and obstacles, etc., in front or rear of the vehicle, a technology to incorporate various types of sensors in bumper fascias have been conventionally known. For example, Patent Literature 2 describes a technology to form, in a bumper fascia, an opening for exposing an antenna portion of an ultrasonic sensor and sealing the gap between the opening and a case portion of the ultrasonic sensor to improve its aesthetic.

### CITATION LIST

### Patent Literature

Patent Literature 1: Japanese Patent Laid-Open No. 2017-144814
Patent Literature 2: Japanese Patent Laid-Open No. 2013-137261

### SUMMARY OF INVENTION

### Problem to be Solved by the Invention

According to conventional vehicle exterior assemblies, in order to dispose lamps on an outer surface of a vehicle body, the body portions and the lens portions of the lamps need to be separately formed from the bumper fascia and assembled thereto, and Similarly, to dispose sensors, the case portions and the antenna portions of the sensors need to be separately formed from the bumper fascia and assembled thereto. For this reason, to install the exterior assembly on the outer surface of the vehicle body, there is a problem of an increased number of components and an increased number of man-hours for its assembly.

In view of the above, one object of the present invention is to provide a vehicle exterior assembly in which portions of lamps and sensors are integrated with a bumper fascia to reduce the number of components and the number of man-hours for assembly so that the vehicle exterior assembly can be easily assembled to an outer surface of a vehicle body.

### MEANS TO SOLVE THE PROBLEM

In order to solve the above-described problem, a vehicle exterior assembly according to the present invention is characterized by comprising: a bumper fascia for being installed on a vehicle body; at least one lamp for providing illumination around the vehicle body, and at least one sensor for collecting information from around the vehicle body, wherein a lens portion of the at least one lamp and an antenna portion of the at least one sensor are integrally formed with the bumper fascia.

In order to further reduce the number of components of the vehicle exterior assembly and the number of man-hours for its assembly, it is preferred that a body portion for being combined with the lens portion of the at least one lamp and a case portion for being combined with the antenna portion of the at least one sensor are integrally molded in resin and assembled to the bumper fascia as at least one single component. More preferably, the bumper fascia is molded in an opaque resin, and the lens portion of the at least one lamp and the antenna portion of the at least one sensor are molded in a transparent resin.

Moreover, a vehicle exterior assembly according to the present invention is characterized by comprising: a bumper fascia for being installed on a vehicle body; at least one lamp for providing illumination around the vehicle body, and at least one sensor for collecting information from around the vehicle body, wherein a body portion of the at least one lamp and a case portion of the at least one sensor are integrally formed with the bumper fascia.

Again, in order to further reduce the number of components of the vehicle exterior assembly and the number of man-hours for its assembly,, it is preferred that a lens portion for being combined with the body portion of the at least one lamp and an antenna portion for being combined with the case portion of the at least one sensor are integrally molded in resin and assembled to the bumper fascia as at least one single component.

Furthermore, according to several embodiments of the present invention, the at least one lamp comprises a first lamp located above the at least one sensor and a second lamp located below the at least one sensor, and the first lamp, the second lamp, and the at least one sensor are arranged in a vertical row.

### EFFECTS OF THE INVENTION

According to the present invention, as the lens portion or the body portion of the at least one lamp and the antenna portion or the case portion of the at least one sensor are integrally formed with the bumper fascia, there is provided a remarkable effect of reducing the number of components of the vehicle exterior assembly and the number of man-hours for its assembly, so that the vehicle exterior assembly can be easily assembled to a front surface of a vehicle body.

### BRIEF DESCRIPTION OF THE DRAWINGS

FIG. 1 is a perspective view of a vehicle representing Embodiment 1 of the present invention.
FIG. 2 is an exploded perspective view showing the vehicle external assembly of Embodiment 1.
FIG. 3 is a cross-sectional view taken on line III-III of FIG. 1, showing the assembly and disassembly of the assembly.
FIG. 4 is a perspective view of a vehicle representing Embodiment 2 of the present invention.
FIG. 5 is an exploded perspective view showing the vehicle external assembly of Embodiment 2.
FIG. 6 is a perspective view showing a variant of the vehicle external assemblies.

### DETAILED DESCRIPTION OF EMBODIMENTS

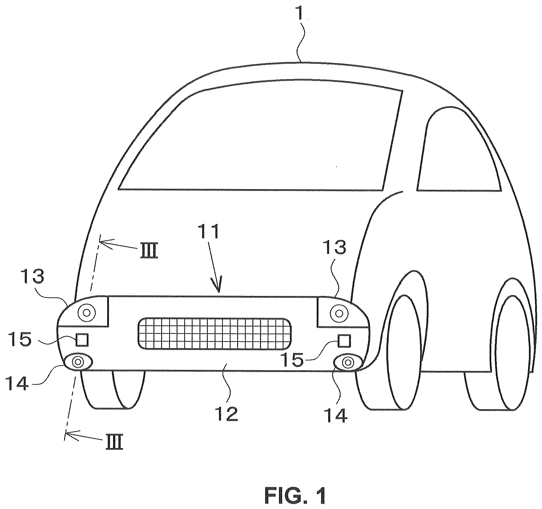

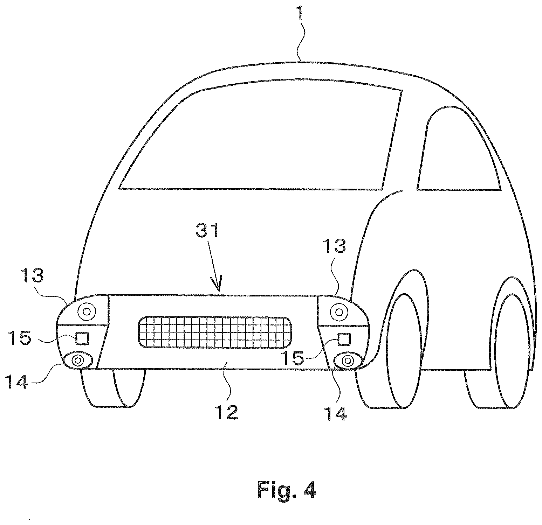

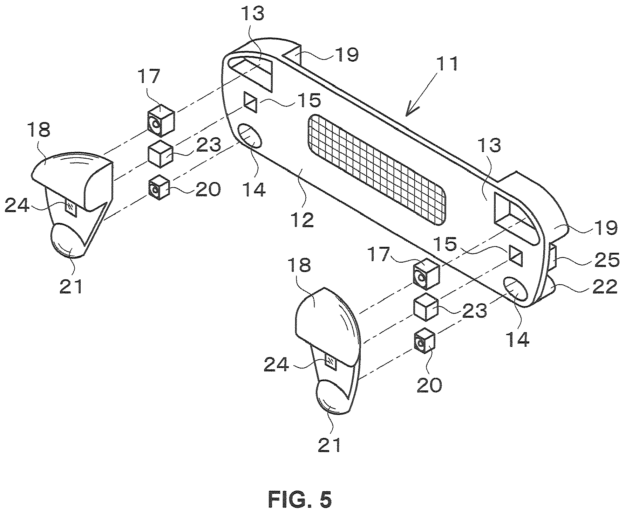

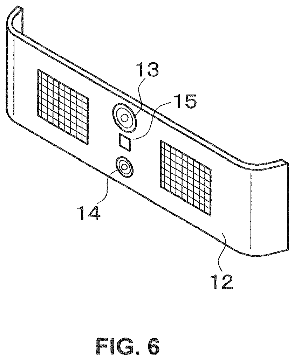

The following describes the present invention embodied as a vehicle exterior assembly for installation on a front surface of a vehicle body with reference to the drawings. FIGS. 1, 2, and 3 show Embodiment 1 of the present invention, and FIGS. 4 and 5 show Embodiment 2 of the present invention. FIG. 6 shows a variant vehicle exterior assembly that can be used in conjunction with Embodiments 1 and 2. In each of the views, identical symbols designate identical or similar elements.

### Embodiment 1

As shown in FIG. 1, a vehicle exterior assembly 11 of Embodiment 1 comprises a bumper fascia 12 installed on the front surface of a vehicle body 1, headlamps 13 that serve as first lamps that provide illumination in front of the vehicle body 1 mainly at night, fog lamps 14 that serve as second lamps that provide auxiliary illumination in front of the vehicle body 1 mainly when it is very foggy, and sensors 15 for collecting information about pedestrians, other vehicles, and obstacles, etc., in front of the vehicle.

The bumper fascia 12 is a surface member of a front bumper, and it is formed of resin in the same color as the vehicle body 1 and elongated along the direction of the width of the vehicle, and the bumper fascia is provided with a reinforcement member and a buffer member (omitted from the view) on its back surface. A camera that senses visible light or an LIDAR or a millimeter-wave radar, etc., that senses electromagnetic waves other than visible light is used as each sensor 15, and a headlamp 13 is disposed above the sensor 15 and a fog lamp 14 is disposed below the sensor 15, so that a **single vertical row of** lamps 13 and 14 and a sensor 15 is **disposed on each of both right and left ends of** the bumper fascia 12.

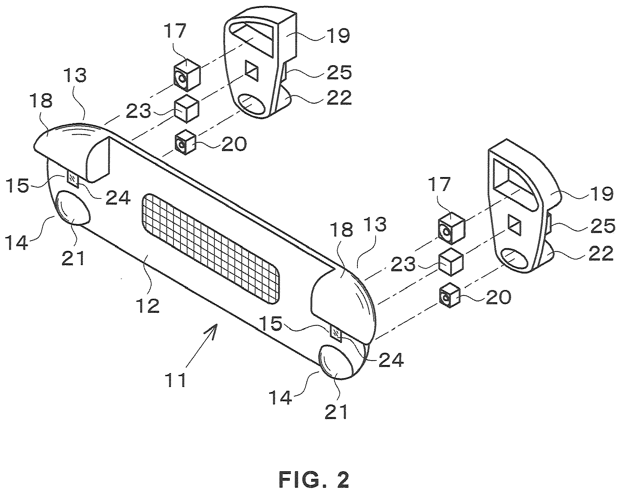

As shown in FIG. 2, the headlamps 13 each include a light-source unit 17 that generates illuminating light, a lens portion 18 that allows illuminating light to transmit therethrough and ahead of the vehicle, and a body portion 19 that retains the light-source unit 17. Similarly, the fog lamps 14 each include a light-source unit 20, a lens portion 21, and a body portion 22. Each of the sensors 15 includes a detection unit 23 that generates a detection wave, an antenna portion 24 that transmits and receives the detection wave, and a case portion 25 that receives and retains the detection unit 23.

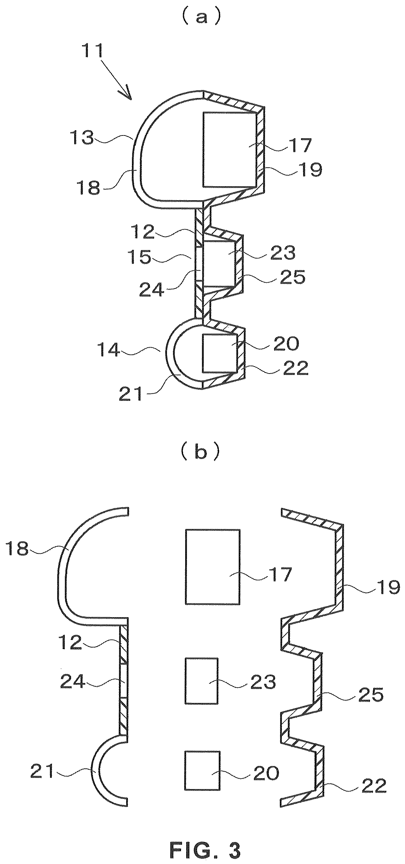

In addition, the lens portions 18 and 21 of the lamps 13 and 14 and the antenna portions 24 of the sensors 15 are integrally formed with the bumper fascia 12. In particular, as shown in FIGS. 3(a) and (b), the bumper fascia 12 is molded in an opaque resin while the lens portions 18 and 21 and the antenna portion 24 are molded in a transparent resin that allows the transmission of visible light therethrough, constituting two-color molding with the bumper fascia 12. However, if the sensors 15 employ an electromagnetic wave other than visible light, the antenna portions 24 may be molded in an opaque resin or formed as openings.

Also, the body portions 19 and 22 of the lamps 13 and 14 and the case portions 25 of the sensors 15 are integrated as resin molds in a separate molding step from that for the bumper fascia 12, and assembled as single components to the back surface of the bumper fascia 12 so as to be combined with the lens portions 18 and 21 of the corresponding lamps 13 and 14 and the antenna portions 24 of the corresponding sensors 15. However, it should be noted that, unlike the illustrated example, body portions 19 and 22 and a case portion 25 may also be molded in two or three separate pieces and individually assembled to the corresponding lens portions 18 and 21 and the corresponding antenna portion 25.

According to the vehicle exterior assembly 11 of Embodiment 1 constructed as above, as the lens portions 18 of the headlamps 13, the lens portions 21 of the fog lamps 14, and the antenna portions 24 of the sensors 15 are integrated with the bumper fascia 12, it is possible to reduce the number of components and the number of man-hours for assembly compared to before, so that the exterior assembly 11 can be easily assembled to the front surface of the vehicle body. In addition, as the body portions 19 and 22 of the lamps 13 and 14 and the case portions 25 of the sensors 15 are integrated as single components, there is also provided an advantage of being able to further reduce the number of components of the exterior assembly 11 and the number of man-hours for its assembly.

### Embodiment 2

As shown in FIG. 4, similar to Embodiment 1, a vehicle exterior assembly 31 of Embodiment 2 has a headlamp 13, a fog lamp 14, and a sensor 15 arranged in a vertical row on each of both right and left ends of a bumper fascia 12. As shown in FIG. 5, the lamps 13 and 14 include light-source units 17 and 20, lens portions 18 and 21, and body portions 19 and 22, respectively, and each of the sensors 15 includes a detection unit 23, an antenna portion 24, and a case portion 25. Unlike Embodiment 1, the body portions 19 and 22 of the lamps 13 and 14 and the case portions 25 of the sensors 15 are integrally formed with the bumper fascia 12.

In addition, the lens portions 18 and 21 of the lamps 13 and 14 and the antenna portions 24 of the sensors 15 are integrated as transparent resin molds in a separate molding step from that for the bumper fascia 12, and assembled as single components to the front surface of the bumper fascia 12 so as to be combined with the body portions 19 and 22 of the corresponding lamps 13 and 14 and the case portions 25 of the corresponding sensors 15. However, it should be noted that, unlike the illustrated example, lens portions 18 and 21 and an antenna portion 24 may also be molded in two or three separate pieces and individually assembled to the corresponding body portions 19 and 22 and the corresponding case portion 25.

According to the vehicle exterior assembly 31 of Embodiment 2 constructed as above, as the body portions 19 of the headlamps 13, the body portions 22 of the fog lamps 14, and the case portions 25 of the sensors 15 are integrated with the bumper fascia 12, it is possible to reduce the number of components of the exterior assembly 31 and the number of man-hours for its assembly compared to before, so that the exterior assembly can be easily assembled to the front surface of the vehicle body. In addition, as the lens portions 18 and 21 of the lamps 13 and 14 and the antenna portions 24 of the sensors 15 are integrated as single components, there is also provided an advantage of being able to further reduce the number of components of the assembly 31 and the number of man-hours for its assembly.

It should be noted that the present invention is not limited to Embodiments 1 and 2 above and can also be practiced by changing the shape or the configuration of some components as appropriate without departing from the spirit of the present invention as set forth below:
(A) As shown in FIG. 6, a headlamp 13, a fog lamp 14, and a sensor 15 may be arranged in a vertical row at the center of the length of the bumper fascia 12, that is, at the center of the width of the vehicle.
(B) The fog lamps 14 of Embodiments 1 and 2 may be replaced with turn signal lamps or autonomous driving indicator lamps below the sensors 15.
(C) The lens portions or body portions of rear combination lamps and the antenna portions or the case portions of sensors may be integrally formed with a rear bumper fascia to be installed on the rear portion of the vehicle body 1.

### LIST OF REFERENCE NUMERALS

- 1: Vehicle body
- 11: Vehicle exterior assembly (Embodiment 1)
- 12: Bumper fascia
- 13: Headlamp
- 14: Fog lamp
- 15: Sensor
- 17: Light source unit of a headlamp
- 18: Lens portion of a headlamp
- 19: Body portion of a headlamp
- 20: Light source unit of a fog lamp
- 21: Lens portion of a fog lamp
- 22: Body portion of a fog lamp
- 23: Detection unit of a headlamp
- 24: Antenna portion of a sensor
- 25: Case portion of a sensor
- 31: Vehicle exterior assembly (Embodiment 2)

## Claims

1. A vehicle exterior assembly **characterized by** comprising a bumper fascia for being installed on a vehicle body; at least one lamp for providing illumination around the vehicle body, and at least one sensor for collecting information from around the vehicle body, wherein a lens portion of the at least one lamp and an antenna portion of the at least one sensor are integrally formed with the bumper fascia.

2. The vehicle exterior assembly according to claim 1, wherein a body portion of the at least one lamp and a case portion of the at least one sensor are integrally formed and assembled to the bumper fascia as at least one single component.

3. The vehicle exterior assembly according to claim 1 or 2, wherein the bumper fascia is molded in an opaque resin, and the lens portion of the at least one lamp and the antenna portion of the at least one sensor are molded in a transparent resin.

4. A vehicle exterior assembly **characterized by** comprising a bumper fascia for being installed on a vehicle body; at least one lamp for providing illumination around the vehicle body, and at least one sensor for collecting information from around the vehicle body, wherein a body portion of the at least one lamp and a case portion of the at least one sensor are integrally formed with the bumper fascia.

5. The vehicle exterior assembly according to claim 4, wherein a lens portion of the at least one lamp and an antenna portion of the at least one sensor are integrally formed and assembled to the bumper fascia as at least one single component.

6. The vehicle exterior assembly according to any one of claims 1-5, wherein the at least one lamp comprises a first lamp located above the at least one sensor and a second lamp located below the at least one sensor, and the first lamp, the second lamp, and the at least one sensor are arranged in a vertical row.
